# EUROPÄISCHE PATENTSCHRIFT

(11) **EP 3 092 355 B1**
(45) Veröffentlichungstag und Bekanntmachung des Hinweises auf die Patenterteilung: **01.01.2020**
(21) Anmeldenummer: 14816113.6
(22) Anmeldetag: 11.11.2014
(51) Int. Cl.: E04F 15/04, B32B 21/14, B32B 3/14, B32B 21/08, B32B 27/40, B32B 3/02, B32B 7/05, E04F 15/02, E04F 15/10

(54) **FUSSBODENDIELE**
FLOORBOARD
LATTES DE REVÊTEMENT DE SOL

(30) Priorität: 27.11.2013 DE 102013113109
(43) Veröffentlichungstag der Anmeldung: 16.11.2016
(73) Patentinhaber: Välinge Innovation AB, 263 65 Viken (SE)
(72) Erfinder: SCHULTE, Guido, 59602 Rüthen-Meiste (DE)
(74) Vertreter: Välinge Innovation AB
(86) Internationale Anmeldenummer: PCT/DE2014/100398
(87) Internationale Veröffentlichungsnummer: WO 2015/078444

(56) Entgegenhaltungen:
- EP-A1- 1 808 311
- WO-A1-03/078761
- WO-A1-2005/054599

## Beschreibung

Die Erfindung betrifft eine Fußbodendiele, welche eine Trägerplatte und eine auf die Trägerplatte oberseitig aufgebrachtes Furnier aufweist, wobei die Trägerplatte und das Furnier über ein Harz miteinander verbunden sind.

Fußbodendielen mit einer Nutzschicht aus Echtholz kommen insbesondere als Echtholzböden oder Parkettböden zum Einsatz. Ein Verfahren zur Herstellung von Parkett oder von Fußbodendielen mit einer Nutzschicht aus Echtholz, dort als Decklage bezeichnet, ist in der DE 102 45 914 A1 beschrieben. Hierbei wird die Decklage aus Echtholz einer Imprägnierung mit duroplastischen Kunstharzen unterworfen und die Decklage bedruckt.

Gängig sind Echtholz-Fußbodendielen mit einem Dreischichtaufbau und profilierten Fügeflächen, dem sogenannten Klick-System. Dieses ermöglicht eine mechanische Verbindung und Verriegelung entlang der Stoßkanten der Fußbodendielen. Die Trägerplatte besteht üblicherweise aus einer hochverdichteten Faserplatte (HDF). In die Trägerplatte wird die Klickverbindung eingefräst. Als Nutzschicht wird auf die Trägerplatte ein Holzfurnier aufkaschiert. Das Holzfurnier kann unterschiedlich dick sein. Bei einer Dicke des Holzfurniers von circa 0,6 mm spricht man von einem Echtholz-oder Furnierboden. Bei einem Parkettboden ist die Nutzschicht mindestens 2,5 mm stark.

Die sichtbare Oberfläche einer Fußbodenpaneele mit einer oberseitigen Nutzschicht aus Echtholz zeigt die Natürlichkeit und Eleganz von echtem gewachsenem Holz. Entsprechend der Vielzahl von unterschiedlichen Holzarten variiert die Optik der Fußbodendielen. Dennoch besteht ein Bedarf, die Optik und Variationsmöglichkeiten der sichtbaren Oberflächen des Echtholzes zu erweitern. Gleiches gilt für Furniere aus Kork.

Fußbodenpaneele, bei denen durch eine Bearbeitung der Randbereiche eine optische Betonung der Oberfläche erzielt wird, sind durch die WO 03/078761 A1, die WO 2005/054599 A1 sowie die EP 1 808 311 A1 bekannt.

Aufwendig ist auch die Vorbereitung der Furniere. Diese werden aus Streifen zusammengefügt und miteinander verklebt oder vernäht. Auf diese Weise erhält man ein auf die großformatige Ausgangsträgerplatte abgestimmtes Großformat der Holzfurniere. Allerdings bedingt diese Vorbereitung auch einen entsprechenden herstellungstechnischen Mehraufwand.

Des Weiteren werden die Holzfurniere, aber auch Korkfurniere, randseitig oft großzügig beschnitten, um diese zu besäumen und einen geraden Seitenrandverlauf sicherzustellen. Dies führt zu einem entsprechenden Verschnitt. Vor diesem Hintergrund ist eine größere Schonung der Ressourcen wünschenswert.

Weiterhin ist festzustellen, dass der Kantenbereich entlang der Seitenränder des Furniers besonders belastet ist. Gerade bei der Verwendung von Holzfurnieren aus weichen Holzarten können sich im Kantenbereich Probleme ergeben und zwar sowohl bei der Bearbeitung der Paneelen im Zuge von weiteren Fertigungsschritten wie beispielsweise einem Bürsten oder Schleifen oder auch durch Abrieb im Zuge der bestimmungsgemäßen Benutzung in einer Bodenfläche.

Der Erfindung liegt ausgehend vom Stand der Technik die Aufgabe zugrunde, eine Fußbodendiele mit einem oberseitigen Furnier zu schaffen, welche kostenmäßig sowie fertigungs- und anwendungstechnisch verbessert ist und eine markante Optik aufweist.

Diese Aufgabe wird erfindungsgemäß durch eine Fußbodendiele gemäß Anspruch 1 gelöst.

Vorteilhafte Ausgestaltungen der erfindungsgemäßen Fußbodendiele sind Gegenstand der abhängigen Ansprüche 2 bis 7.

Die vorliegende Erfindung bezieht sich insbesondere auf Fußbodendielen mit einer Dicke des Holzfurniers von kleiner als 2,5 mm, insbesondere mit einer Dicke zwischen 0,6 mm und 1,2 mm. Ebenso kann es sich bei dem Furnier um ein Korkfurnier handeln, insbesondere um ein Korkeichenfurnier.

Die erfindungsgemäße Fußbodendiele weist eine Trägerplatte mit einem oberseitigen Furnier auf. Die Trägerplatte ist ein Plattenmaterial aus einem Holzwerkstoff wie beispielsweise Massivholz, Spanholz, Holzfaserwerkstoff, MDF (Medium Density Fiberboard) oder HDF (High Density Fiberboard). In der Praxis besteht die Trägerplatte insbesondere aus HDF. Auch Trägerplatten aus anderen Werkstoffen oder Werkstoffgemischen sind für die Praxis geeignet. Es können Trägerplatten aus wasserfesten Materialien Anwendung finden, z. B. auf Basis mineralischer Werkstoffe wie Faser-Zement Sand-Bindegemische oder Holz-Kunststoff-Verbundwerkstoffe (Wood-Plastic-Composites WPC) sowie Holzfaser-Polymer-Verbundwerkstoffe. Geeignet sind auch Magnesitplatten. Ein Aspekt zielt hier auch auf die Verwendung von naturfaserverstärktem Kunststoff als Werkstoff für die Trägerplatte bzw. die Ausgangsträgerplatte ab. Neben Holzfasern können auch andere Pflanzenfasern wie Jute oder Flachs verwendet werden. Hierbei kommt ein Naturfaser- oder Naturmehlanteil von 50 % bis 90 % in einer Kunststoffmatrix vorzugsweise aus Polypropylen (PP) zum Tragen. Ferner kann ein Holz-Kunststoff-Verbundwerkstoff auf Basis von thermoplastisch verabeitbaren Duroplasten wie modifiziertes Melaminharz mit Naturfaser- bzw. Naturmehlanteil Verwendung finden. Ein für die Praxis interessanter Ansatz bietet auch ein Bamboo Plastic Composite (BPC). Bei diesem Werkstoff kommen Bambusfasern bzw. Bambusmehl als Naturwerkstoff zum Einsatz.

Wie bereits erwähnt, können auch Platten auf Basis zementhaltiger Bindemittel bzw. Faserzementplatten als Trägerplatte Verwendung finden ebenso wie Magnesitplatten. Magnesitplatten bestehen aus einem Gemisch von Magnesiumoxid, Calciumcarbonat, Silikaten sowie Fasern, insbesondere Holz- und/oder Glasfasern. Ein Vorteil von Magnesitplatten ist das Gewicht und das geringe Wärmeleitungsvermögen ebenso wie ihre Feuerfestigkeit. Magnesitplatten werden als nicht brennbar eingestuft.

Die Trägerplatte kann auch aus elastischen Materialien bestehen, beispielsweise Vlies bzw. Vlieswerkstoffen oder auf Basis von Cellulose. In diesem Zusammenhang kommen insbesondere relativ dünne Trägerplatten mit einer Dicke zwischen 1 mm und 6 mm zur Anwendung.

Die Trägerplatte und das Furnier sind über ein Harz miteinander thermisch verpresst und unlösbar verklebt. Erfindungsgemäß ist an zumindest zwei Seitenrändern des Furniers ein Randstreifen vorgesehen. Dieser Randstreifen besteht aus Harz. Bevorzugt ist allseitig umlaufend um das Furnier ein Randstreifen aus Harz ausgebildet.

Vorzugsweise unterscheidet sich der Randstreifen optisch vom Furnier. Man kann folglich den Randstreifen deutlich vom Furnier unterscheiden, jedoch ist der Randstreifen optisch auf das Furnier abgestimmt. Der Randstreifen weist die Grundfärbung des Furniers auf, ist jedoch vom Farbton einheitlich. Eine Varianz in der optischen Gestaltung einer Fußbodendiele ergibt sich, wenn ein Harz verwendet wird, welches farblich im Kontrast zur Farbe des Furniers steht. Hierdurch kann beispielsweise eine Fugenoptik gezielt erzeugt werden. Durch das Zusammenspiel von Harz und Furnier ist eine optische Akzentuierung der Oberfläche einer Fußbodendiele möglich. Hierfür können im Harz auch Effektmaterialien wie Pigmente und andere Füllstoffe eingesetzt werden. Ein Effektmaterial kann beispielsweise Glimmer sein. Auch fluoreszierende Pigmente als Effektmaterial sind möglich.

Das Furnier ist von seinen Abmessungen kleiner als die Trägerplatte. Demzufolge deckt das Furnier die Trägerplatte nicht vollkommen ab. Hierbei ergeben sich an zumindest zwei Seitenrändern des Furniers Randstreifen, die durch Harz gebildet sind. Die Oberfläche der Randstreifen verläuft in der Ebene der Oberfläche des Furniers. Das Harz füllt die Randstreifen auf und egalisiert die Fläche zur Oberfläche des Furniers.

Ein Aspekt der Erfindung sieht vor, dass das Furnier ungerade Seitenränder besitzt, insbesondere können die Seitenränder unbeschnitten sein. Ein sonst üblicher Verschnitt entfällt. Dies führt zu einer besseren Ausnutzung des zur Verfügung stehenden Rohstoffmaterials und einer Ressourcenschonung.

Ausgangsprodukt bei der Fertigung von erfindungsgemäßen Fußbodendielen ist eine großflächige Ausgangsträgerplatte. Die Ausgangsträgerplatte ist rechteckig konfiguriert und hat eine Größe von 2.000 mm bis 5.600 mm in der Länge sowie 1.200 mm bis 2.100 mm in der Breite. Üblicherweise besitzt die Trägerplatte bzw. die Ausgangsträgerplatte eine Dicke von 4,5 mm bis 12 mm.

Die Furniere werden als Streifen oder Platten auf eine großformatige Ausgangsträgerplatte aufgelegt. Die einzelnen auf der Ausgangsträgerplatte angeordneten Streifen bzw. Platten des Holzfurniers liegen mit Abstand zueinander, so dass zwischen den einzelnen Furnieren ein Spalt vorhanden ist. Zwischen Ausgangsträgerplatte und den Furnieren wird das Harz eingegliedert. Es handelt sich insbesondere um ein duroplastisches Kunstharz. Es können farbige oder transparente Melaminharze oder Melamin/Polyurethan-Harz-Gemische zur Anwendung gelangen. Das Harz kann auf einem papierförmigen Träger in Form eines Papierimprägnats vorliegen, auch Harzpapier genannt. Das Harz bzw. die Harzschicht kann des Weiteren als Harzfilm vorliegen bzw. ausgebildet sein. Es kann eine Harzschicht durch einen oberseitig auf die Trägerplatte aufgebrachten Harzfilm gebildet sein. Auch kann eine Harzschicht unterseitig auf den Furnieren in Form eines Harzfilms gebildet sein. In beiden Fällen wird das Harz flüssig auf die Trägerplatte bzw. das Furnier aufgetragen und angetrocknet bzw. vorkondensioniert. Bei einem Auftrag des Harzes auf das Furnier wird das Holzfurnier mit Harz imprägniert. Die Menge an Harz ist so bemessen, dass eine zuverlässige Verklebung zwischen der Ausgangsträgerplatte und den Furnieren entsteht sowie der Spalt zwischen den Furnieren ausgefüllt und egalisiert wird.

Bei dem erfindungsgemäß verwendeten Harz handelt es sich insbesondere um ein duroplastisches Kunstharz. Ein Aspekt der Erfindung zielt darauf ab, dass Harze Verwendung finden, die unter Hitze und Druck reagieren und aushärten. In diesem Zusammenhang bietet sich die Verwendung von aminoplastischen, duroplastischen oder Reaktivharzen wie Polyurethan (PUR) oder thermoplastisches Polyurethan an.

Bei der Fertigung werden die Ausgangsträgerplatte, das Harz und die Furniere miteinander verpresst und miteinander verbunden. Hierbei wird das Furnier vom Harz infiltriert, vorzugsweise vollständig durchdrungen. Das Verpressen erfolgt heiß bei einer Temperatur von mehr als 100° C, insbesondere mehr als 120° C, vorzugsweise bei einer Temperatur zwischen 180° C und 210° C. Die Presstemperatur bezieht sich auf die Temperatur am Pressblech der Presse. Diese Temperatur steht auch an den Kontaktflächen des Pressblechs mit der Oberseite des Furniers bzw. der Unterseite der Trägerplatte an.

Unterseitig der Trägerplatte ist eine Gegenzuglage vorgesehen. Diese Gegenzuglage wird beim Pressvorgang unterseitig mit der Trägerplatte gefügt. Hierzu wird die Gegenzuglage bei der Bildung des Mehrschichtkörpers aus Ausgangsträgerplatte, Harz und Furnieren unterseitig der Ausgangsträgerplatte positioniert. Das Verpressen des Mehrschichtkörpers erfolgt in einer Presse und zwar bei einem Pressdruck von größer oder gleich (≥) 1.000 Kilopascal (kPa). Vorzugsweise liegt der Pressdruck oberhalb von 3.500 Kilopascal (kPa). Die Presstemperatur ist größer oder gleich (≥) 100° C, vorzugsweise liegt die Presstemperatur zwischen 180° C und 210° C. Die Presszeit, bei der der Mehrschichtkörper in der Presse mit Druck beaufschlagt wird, liegt zwischen 10 Sekunden und 60 Sekunden.

Beim Pressvorgang kann die Oberfläche der Furniere durch ein Strukturblech oder einen Strukturgeber eine Struktur, ein Muster oder Ornamente erhalten. Die Struktur kann im Glanzgrad in Teilbereichen variieren. Weiterhin sind verschiedene Strukturtiefen möglich. Die Strukturtiefe kann bis 0,6 mm betragen. Bezogen auf die Furnierstärke kann die Struktur eine Strukturtiefe von 2/3 der Furnierstärke besitzen.

Nach dem Pressvorgang wird der verpresste Mehrschichtkörper abgekühlt und in einzelne Dielen geteilt. Wie bereits ausgeführt, füllt das Harz den Spalt zwischen benachbarten Furnieren aus und egalisiert die Fläche. Das Teilen des verpressten großformatigen Mehrschichtkörpers in einzelne Dielen erfolgt entlang bzw. im Bereich des Spaltes zwischen zwei benachbart zueinander angeordneter Furniere. Entsprechend ist die Breite der einzelnen Furniere auf die Breite einer abzuteilenden einzelnen Diele abgestimmt. Die einzelnen Dielen werden in einem nachfolgenden Arbeitsschritt an ihren Seitenrändern profiliert. Die Profilierung dient insbesondere zur Ausbildung von Verbindungsmitteln wie Nut und Feder oder Klickverbindungen an den Längs- und Schmalseiten der Dielen. Auch können Falze ausgebildet werden. Da die Seitenrandbereiche der Dielen durch das Harz stabilisiert sind, ist eine mechanische Bearbeitung der Seitenränder vorteilhaft möglich. Insbesondere kann ein Ausfransen der oberseitigen Nutzschicht aus Furnier vermieden werden.

Im Zuge einer mechanischen Bearbeitung der Seitenränder einer Diele wird der Randstreifen aus Harz ganz oder teilweise erhalten.

Beim Pressvorgang wird das Harz unter Temperatureinfluss plastifiziert und dringt bzw. infiltriert in das Holzfurnier. Bevorzugt durchdringt das Harz das Holzfurnier vollständig bis zur Oberseite des Holzfurniers. Hierbei werden im Holzfurnier vorhandene Poren, Risse, Spalten und/oder Fehlstellen beim Pressvorgang mit Harz verfüllt. Das Harz bildet eine unlösbare Verbindung zwischen dem Holzfurnier und der Trägerplatte. Ein weiterer Vorteil der Erfindung besteht folglich darin, dass zwei Fertigungsschritte, nämlich Kleben und Spachteln des Holzfurniers gemeinsam in einem Arbeitsvorgang durchgeführt werden.

Insbesondere wird das Verpressen des Mehrschichtkörpers so ausgeführt, dass das Furnier mit Harz durchtränkt und nach dem Verpressen Harz an der Oberfläche des Furniers sichtbar ist. In diesem Zusammenhang kommen insbesondere auf die Farbe des Furniers farblich abgestimmte Harze zur Anwendung. Produkttechnisch ist ein schwarzes Harz universell einsetzbar und vorteilhaft. Zweckmäßigerweise wird das Verpressen so ausgeführt, dass die Oberfläche des Furniers und damit der Diele nur mit sehr wenig Harz oder gar keinem Harz behaftet ist. Poren, Risse, Spalten und sonstige Fehlstellen sind sichtbar ausgefüllt. Es tritt jedoch kein oder zumindest nur sehr wenig überschüssiges Harz an der Oberfläche aus. Das verpresste Produkt braucht dann nur noch strukturgebürstet werden und erhält gegebenenfalls eine Oberflächenbeölung oder Lackierung.

Das Harz kann einen Füllstoff enthalten bzw. mit einem Füllstoff angedickt sein. Hierdurch ist mehr Masse vorhanden, um Poren, Risse, Spalten und/oder Fehlstellen auszufüllen. Als Füllstoff können organische oder anorganische Materialien zum Einsatz gelangen, insbesondere mineralische Pigmente, Puder oder Pulver ebenso wie Holzpuder oder Holzmehl.

Die Oberfläche der Fußbodendiele bzw. die Oberfläche des Furniers und die Oberfläche der Seitenränder werden nach dem Verpressen einer mechanischen Oberflächenbearbeitung unterzogen. Im Rahmen der Oberflächenbearbeitung erfolgt insbesondere ein Schleifen oder ein Bürsten der Oberfläche. Auch kann die Oberfläche mechanisch geprägt und strukturiert werden. Da das oberseitige Furnier durch das Harz imprägniert ist, ist auch die Widerstandsfähigkeit, insbesondere die Eindruckbeständigkeit und Durchriebbeständigkeit erhöht. Die hohe Widerstandsfähigkeit ist vorteilhaft bei einer mechanischen Bearbeitung des Holzfurniers. Die Imprägnierung des Furniers mit Harz lässt auch die Verwendung von weicheren Furnieren, beispielsweise Holzfurniere aus Hölzern wie Lärche oder auch grobporigeren Hölzern zu.

Weiterhin ist eine Versiegelung der Oberfläche möglich, beispielsweise durch den Auftrag einer Farbe, einer Beize, eines Öls oder auch eines Lack- bzw. Lacksystems. In diesem Zusammenhang kann die Oberfläche auch mit einem Dekor bedruckt sein.

Die Erfindung ist nachfolgend anhand von Zeichnungen beschrieben. Es zeigen:
- Figur 1: in vergrößerter Darstellung den Bereich der Längsseite zweier einander benachbarter Fußbodendielen mit korrespondierenden Verriegelungsmitteln;
- Figur 2: einen Ausschnitt aus zwei miteinander gekoppelten Fußbodendielen;
- Figur 3a: schematisiert eine Draufsicht auf einen Fußbodenbelag aus erfindungsgemäßen Fußbodendielen;
- Figur 3b: eine Draufsicht auf eine erfindungsgemäße Fußbodendiele und
- Figur 3c: zwei einzelne Fußbodendielen sowie ein Ausschnitt aus einem Fußbodenbelag gebildet aus den Fußbodendielen ebenfalls in der Draufsicht.

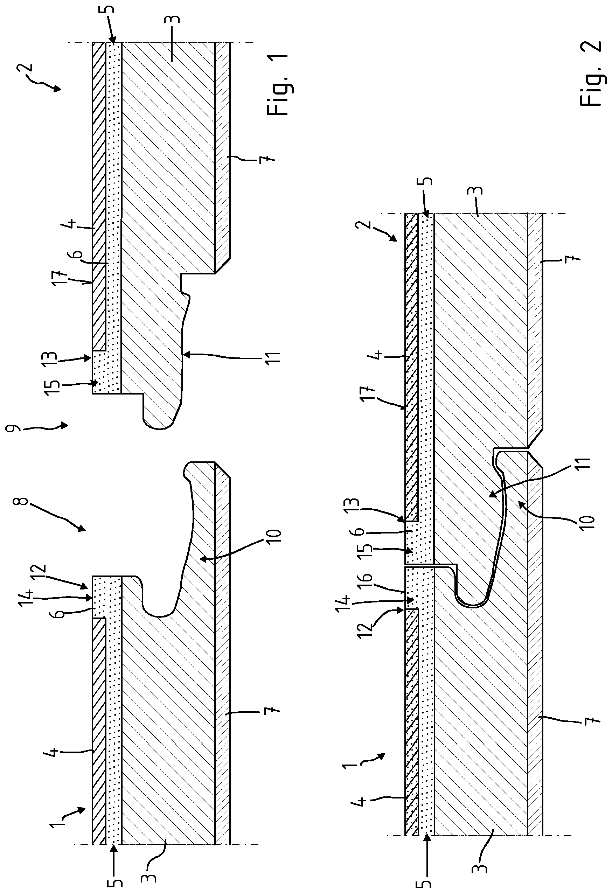

Die Figuren 1 und 2 verdeutlichen schematisch den Aufbau von erfindungsgemäßen Fußbodendielen 1 bzw. 2 in ihrer Vertikalebene. Die Figuren, insbesondere was die Dicke der einzelnen Schichten anbelangt, sind nicht maßstäblich zu verstehen.

Jede Fußbodendiele 1, 2 weist eine Trägerplatte 3 auf, auf deren Oberseite ein Furnier, nämlich ein Holzfurnier 4 aufgebracht ist. Die Trägerplatte 3 und das Holzfurnier 4 sind über eine Harzschicht 5 aus Harz 6 vollflächig miteinander verpresst und verklebt. Unterseitig der Trägerplatte 3 ist eine Gegenzuglage 7 vorgesehen. An den Längsseiten 8,9 der Fußbodendielen 1,2 sind Verriegelungsleisten 10, 11 vorgesehen. Bei in einem Fußbodenbelag benachbarten Fußbodendielen 1, 2 kommen die jeweils korrespondierenden Verriegelungsleisten 10, 11 miteinander in Eingriff. In der Figur 1 ebenso wie in der Figur 2 sind die Verriegelungsleisten 10, 11 an zwei einander gegenüberliegenden Längsseiten 8, 9 einer Fußbodendiele 1, 2 dargestellt. Die Fußbodendielen 1, 2 weisen auch an ihren jeweiligen Kopfseiten Verriegelungsmittel auf, die jedoch hier nicht zu erkennen sind.

Die Trägerplatte 3 und das oberseitige Holzfurnier 4 sowie die Trägerplatte 3 und die unterseitige Gegenzuglage 7 sind miteinander thermisch verpresst und unlösbar miteinander verklebt. Die Verklebung zwischen Trägerplatte 3 und Holzfurnier 4 erfolgt über das eingegliederte Harz 6. Auch die Gegenzuglage 7 ist mit der Trägerplatte 3 über ein Harz verklebt.

An der Oberseite der Fußbodendielen 1, 2 ist an zumindest zwei Seitenrändern 12, 13 des Holzfurniers 4 ein Randstreifen 14, 15 ausgebildet. Dieser Randstreifen 14, 15 besteht aus Harz 6. Die Oberfläche 16 der Randstreifen 14, 15 verläuft in der Ebene der Oberfläche 17 des Holzfurniers 4.

Beim Verpressen des aus Trägerplatte 3, Holzfurnier 4, Gegenzuglage 7 mit jeweils dazwischen vorgesehenem Harz 6 (Harzschicht, Harzfilm) wird das Harz 6 plastifiziert. Das oberseitig vorgesehene Harz 6 zwischen Trägerplatte 3 und Holzfurnier 4 infiltriert das Holzfurnier 4. Hierbei kann das Harz 6 das Holzfurnier 4 bis zur Oberfläche 17 des Holzfurniers 4 durchdringen. Dies ist in der Figur 2 verdeutlicht.

Im Holzfurnier 4 vorhandene Poren, Risse, Spalten und/oder Fehlstellen werden beim Verpressen mit Harz 6 verfüllt. Es erfolgt das Verkleben des Holzfurniers 4 mit der Trägerplatte 3 und das Spachteln der Oberfläche 17 des Holzfurniers 4 gemeinsam in einem Arbeitsvorgang beim Verpressen des Mehrschichtkörpers.

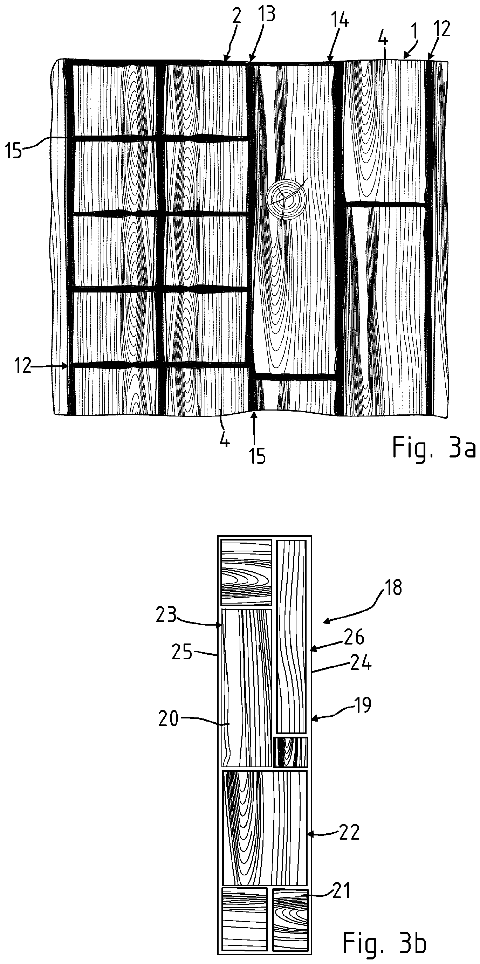

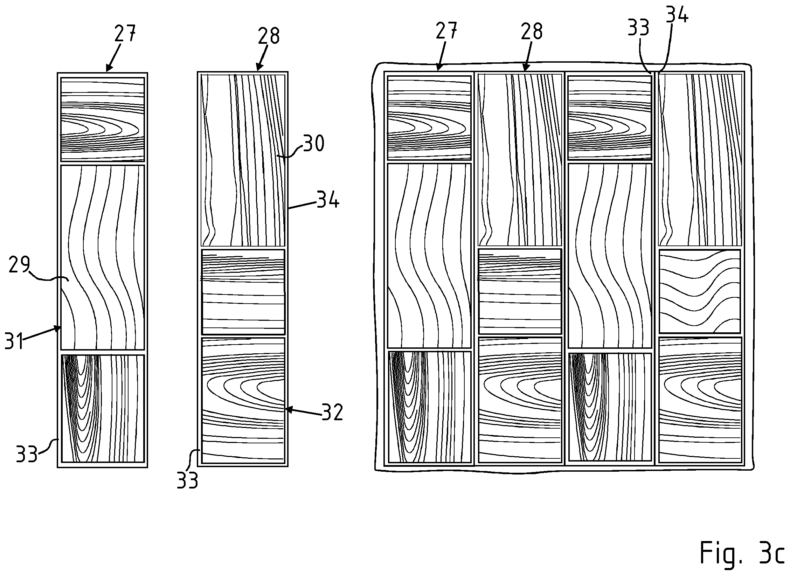

Einen beispielhaft dargestellten Ausschnitt aus einem Fußbodenbelag gebildet aus erfindungsgemäßen Fußbodendielen 1, 2 zeigt die Figur 3 in der Draufsicht. Die Fußbodendielen 1, 2 sind zu einem Fußbodenbelag gekoppelt. Die Seitenränder 12, 13 der Holzfurniere 4 weisen jeweils umlaufend einen Randstreifen 14, 15 gebildet aus Harz 6 auf. Poren, Risse, Spalte und/oder Fehlstellen wie Astlöcher innerhalb der Holzfurniere 4 sind mit Harz 6 ausgefüllt. Die Oberfläche 17 des Holzfurniers 4 kann nach der Verpressung farblich gebeizt oder mit Dekoren oder Mustern bedruckt werden. Anschließend wird eine Schutzschicht bzw. Versiegelung aufgetragen, beispielsweise aus transparentem Lack, Fußbodenöl oder Ähnlichem. Weiterhin ist es möglich, die Kanten bzw. Seitenränder der Fußbodendiele, die aus hartem hochfesten Harzmaterial bestehen, farblich zu bedrucken oder zu lackieren.

Die Figur 3b zeigt eine Fußbodendiele 18. Diese weist eine Trägerplatte 19 und oberseitig eine Anzahl Holzfurniere 20, 21 auf. Wie zuvor beschrieben, sind die Trägerplatte 19 und die Holzfurniere 20, 21 thermisch miteinander verpresst. Entlang der Seitenränder 22, 23 der Holzfurniere 20, 21 sind Randstreifen 24, 25 ausgebildet, die aus Harz 26 bestehen. Man erkennt, dass die Oberfläche der Fußbodendiele 18 aufgrund der geometrisch verschiedenartig ausgestaltet und angeordneten Holzfurniere 20, 21 einen ungleichmäßigen Charakter besitzt.

Die Figur 3c zeigt zwei einzelne Fußbodendielen 27, 28 sowie einen Ausschnitt aus einem Fußbodenbelag gebildet aus Fußbodendielen 27. 28. Der Aufbau der Fußbodendielen 27, 28 ist wie zuvor beschrieben. Die Fußbodendielen 27, 28 besitzen oberseitige Holzfurniere 29, 30. Jeweils umlaufend an den Seitenrändern 31, 32 sind Randstreifen 33, 34 aus hochfestem Harzmaterial ausgebildet. Grundsätzlich können die Holzfurniere 29, 30 regelmäßig aber auch unregelmäßig angeordnet sein.

### Bezugszeichen:

- 1 -: Fußbodendiele
- 2 -: Fußbodendiele
- 3 -: Trägerplatte
- 4 -: Holzfurnier
- 5 -: Harzschicht
- 6 -: Harz
- 7 -: Gegenzuglage
- 8 -: Längsseite
- 9 -: Längsseite
- 10 -: Verriegelungsleiste
- 11 -: Verriegelungsleiste
- 12 -: Seitenrand
- 13 -: Seitenrand
- 14 -: Randstreifen
- 15 -: Randstreifen
- 16 -: Oberfläche
- 17 -: Oberfläche
- 18 -: Fußbodendiele
- 19 -: Trägerplatte
- 20 -: Holzfurnier
- 21 -: Holzfurnier
- 22 -: Seitenrand v. 20
- 23 -: Seitenrand v. 21
- 24 -: Randstreifen
- 25 -: Randstreifen
- 26 -: Harz
- 27 -: Fußbodendiele
- 28 -: Fußbodendiele
- 29 -: Holzfurnier
- 30 -: Holzfurnier
- 31 -: Seitenrand
- 32 -: Seitenrand
- 33 -: Randstreifen
- 34 -: Randstreifen

## Patentansprüche

1. Fußbodendiele (1, 2), welche eine Trägerplatte (3; 19) mit einem oberseitigen Furnier (4; 20, 21; 29, 30) aufweist, wobei die Trägerplatte (3; 19) und das Furnier (4; 20, 21; 29, 30) über ein Harz (6; 26) miteinander verbunden sind, **dadurch gekennzeichnet, dass** an zumindest zwei Seitenrändern (12, 13; 22, 23; 31, 32) des Furniers (4; 20, 21; 29, 30) ein Randstreifen (14, 15; 24, 25; 33, 34) vorgesehen ist und die Randstreifen (14, 15; 24, 25; 33, 34) aus Harz (6) bestehen, wobei die Oberfläche (16) der Randstreifen (14, 15; 24, 25; 33, 34) in der Ebene der Oberfläche (17) des Furniers (4; 20, 21; 29, 30) verläuft.

2. Fußbodendiele nach Anspruch 1, **dadurch gekennzeichnet, dass** sich die Randstreifen (14, 15; 24, 25; 33, 34) optisch vom Furnier (4; 20, 21; 29, 30) unterscheiden.

3. Fußbodendiele nach wenigstens einem der Ansprüche 1 oder 2, **dadurch gekennzeichnet, dass** das Furnier (4) ungerade Seitenränder (12, 13) besitzt.

4. Fußbodendiele nach wenigstens einem der Ansprüche 1 bis 3, **dadurch gekennzeichnet, dass** das Harz (6; 26) in das Furnier (4; 20, 21; 29, 30) infiltriert ist, insbesondere durchtränkt.

5. Fußbodendiele nach wenigstens einem der Ansprüche 1 bis 4, **dadurch gekennzeichnet, dass** unterseitig der Trägerplatte (3) eine Gegenzuglage (7) vorgesehen ist.

6. Fußbodendiele nach wenigstens einem der Ansprüche 1 bis 5, **dadurch gekennzeichnet, dass** das Harz (6) einen Füllstoff enthält.

7. Fußbodendiele nach wenigstens einem der Ansprüche 1 bis 6, **dadurch gekennzeichnet, dass** die Oberfläche (17) des Furniers (4) und/oder die Oberfläche (17) der Randstreifen (14, 15) geschliffen, geprägt, gebürstet und/oder versiegelt sind.

## Claims

1. Floorboard (1, 2) which comprises a carrier plate (3; 19) with a veneer (4; 20, 21; 29, 30) on the upper side, wherein the carrier plate (3; 19) and the veneer (4; 20, 21; 29, 30) are bonded together via a resin (6; 26), **characterized in that** an edge strip (14, 15; 24, 25; 33, 34) is provided on at least two side edges (12, 13; 22, 23; 31, 32) of the veneer (4; 20, 21; 29, 30) and the edge strips (14, 15; 24, 25; 33, 34) consist of resin (6), wherein the surface (16) of the edge strips (14, 15; 24, 25; 33, 34) extends in the plane of the surface (17) of the veneer (4; 20, 21; 29, 30).

2. Floorboard according to claim 1, **characterized in that** the edge strips (14, 15; 24, 25; 33, 34) differ optically from the veneer (4; 20, 21; 29, 30).

3. Floorboard according to at least one of claims 1 or 2, **characterized in that** the veneer (4) has uneven side edges (12, 13).

4. Floorboard according to at least one of claims 1 to 3, **characterized in that** the resin (6; 26) is infiltrated, in particular impregnated, into the veneer (4; 20, 21; 29, 30).

5. Floorboard according to at least one of claims 1 to 4, **characterized in that** a balancing layer (7) is provided on the underside of the carrier plate (3).

6. Floorboard according to at least one of claims 1 to 5, **characterized in that** the resin (6) contains a filler.

7. Floorboard according to at least one of claims 1 to 6, **characterized in that** the surface (17) of the veneer (4) and/or the surface (17) of the edge strips (14, 15) are ground, embossed, brushed and/or sealed.

## Revendications

1. Planche de plancher (1, 2), qui présente une plaque de support (3 ; 19) avec une feuille de placage (4 ; 20, 21 ; 29, 30) au-dessus, où la plaque de support (3 ; 19) et la feuille de placage (4 ; 20, 21 ; 29, 30) sont liées l'une à l'autre par le biais d'une résine (6 ; 26), **caractérisée en ce qu'**une bande latérale (14, 15 ; 24, 25 ; 33, 34) est prévue au niveau d'au moins deux bords latéraux (12, 13 ; 22, 23 ; 31, 32) de la feuille de placage (4 ; 20, 21 ; 29, 30) et les bandes latérales (14, 15 ; 24, 25 ; 33, 34) consistent en résine (6), où la surface (16) des bandes latérales (14, 15 ; 24, 25 ; 33, 34) s'étend dans le plan de la surface (17) de la feuille de placage (4 ; 20, 21 ; 29, 30).

2. Planche de plancher selon la revendication 1, **caractérisée en ce que** les bandes latérales (14, 15 ; 24, 25 ; 33, 34) diffèrent optiquement de la feuille de placage (4 ; 20, 21 ; 29, 30).

3. Planche de plancher selon au moins l'une des revendications 1 ou 2, **caractérisée en ce que** la feuille de placage (4) possède des bords latéraux (12, 13) non rectilignes.

4. Planche de plancher selon au moins l'une des revendications 1 à 3, **caractérisée en ce que** la résine (6 ; 26) est infiltrée dans la feuille de placage (4 ; 20, 21 ; 29, 30), en particulier l'imprègne.

5. Planche de plancher selon au moins l'une des revendications 1 à 4, **caractérisée en ce qu'**une couche à contre-traction (7) est prévue sous la plaque de support (3).

6. Planche de plancher selon au moins l'une des revendications 1 à 5, **caractérisée en ce que** la résine (6) contient une charge.

7. Planche de plancher selon au moins l'une des revendications 1 à 6, **caractérisée en ce que** la surface (17) de la feuille de placage (4) et/ou la surface (17) des bandes latérales (14, 15) est poncée, gaufrée, brossée et/ou vitrifiée.
